# EUROPEAN PATENT SPECIFICATION

(11) **EP 0 839 383 B1**
(45) Date of publication and mention of the grant of the patent: **23.06.2010**
(21) Application number: 96915339.4
(22) Date of filing: 29.04.1996
(51) Int. Cl.: H01J 37/256, H01J 1/30, H01J 9/02, G01B 7/34, G01K 7/02, G01K 7/06

(54) **TAPERED STRUCTURE SUITABLE FOR MICROTHERMOCOUPLES MICROELECTRODES, FIELD EMISSION TIPS AND MICROMAGNETIC SENSORS WITH FORCE SENSING CAPABILITIES**
KEGELFÖRMIGE STRUKTUR FÜR MIKROTHERMOELEMENT-MIKROELEKTRODEN,FELDEMISSIONSSPITZEN UND ZUR KRAFTMESSUNG GEEIGNETER, MIKROMAGNETISCHER FÜHLER
STRUCTURE CONIQUE CONCUE POUR DES MICRO-ELECTRODES DE MICROTHERMOCOUPLES, DES POINTES A EMISSION DE CHAMP ET DES CAPTEURS MICROMAGNETIQUES POUVANT DETECTER UNE FORCE

(30) Priority: 30.04.1995 IL 11355195
(43) Date of publication of application: 06.05.1998
(73) Proprietor: Lewis, Aaron, Jerusalem 93707 (IL)
(72) Inventor: LEWIS, Aaron, Jerusalem 93707 (IL); FISH, Galina, 90916 Jerusalem (IL); KOKOTOV, Sofia, Maale Adumin 90610 (IL); LIBERMAN, Kloni, Jerusalem 93707 (IL)
(74) Representative: Dreiss
(86) International application number: PCT/US1996/005655
(87) International publication number: WO 1996/035225

(56) References cited:
- EP-A- 0 245 660
- EP-A- 0 483 579
- EP-A- 0 528 391
- WO-A-92/21135
- US-A- 3 819 420
- US-A- 3 819 420
- US-A- 4 747 698
- US-A- 5 166 520
- US-A- 5 204 581

## Description

### Field of the Invention

The present invention relates, in general, to the fabrication of straight and bent microelectrodes, microthermocouples, micromagnetic and field emission tips for the measurement of spatially localized rapid temperature changes, electrochemistry and micromagnetic inhomogeneities and the production of directed electron beams, and to the structure of such tips. The disclosed methodology and structure have a wide variety of uses, and allow for the interface of the device of the invention with all current scanned probe microscopes.

### Background of the Invention

The measurements of spatially localized rapid temperature changes are required in studies of many physical and biological processes and objects. These can include such diverse subjects as turbulent flows, changes associated with processes of explosion and combustion, microtemperature measurements in biology at the cellular and subcellular level and microtemperature measurements in evolving chemical reactions. For all these applications a microthermocouple is the most convenient detector.

In recent publications, fast microthermocouples have been described with response times of milliseconds and spatial resolutions of from hundreds [L.J. Forney, E.L. Meeks, J. Ma, and G.C. Fralick, Rev.Sci.Instrum. 64, 1280 (1993)] to tens [P. Beckman, R.P. Roy, K. Whitfield, and A. Hasan, Rev.Sci.Instrum. 64, 2947 (1993)] of micrometers. Such microthermocouples may also be used as point radiation microdetectors in a range of wavelengths from the UV to the IR.

In addition to the above Pendley and Abruna [B.D. Pendley and H.Dl Abruña, Anal. Chem. 62, 782 (1990)] have considered the problem of microelectrodes for microchemical measurements and achieved outer diameters of a few microns under non-reproducible conditions. In addition, micromagnetic measurements are made using magnetic wires that are electropolished in which it is difficult to construct such tips [K. Sueoka, F. Sai, K. Parker and J. Arnolddussen, J. Vac.Sci. and Tech. B12, 1618 (1994)]. Furthermore, there is great interest in making microtip field emission tips [C.A. Spindt, et al. J. Appl.Phys. 47, 5248 (1976)] but there is an active interest in new methodologies for making such tips with better characteristics.

### State of Prior Art

No devices or methodologies have been reported that can provide thermal or electrochemical measurements in isolated submicrometer size volumes or in macrovolumes with submicrometer spatial resolution. In addition, the response time of such measurements are on the order of milliseconds and no shorter response times are known.

Recent publications, as noted above, have described response times of milliseconds with spatial resolutions from hundreds of micrometers. In addition, some recent publications have described thermal imaging using atomic force microscopy (AFM) without specific measurements of the time response of these devices [A. Majumdar, J.P. Carrejo and J. Lai, Appl. Phys. Lett. 62, 2501 (1993)]. The thermocouples that have been used in AFM employed a 2-wire thermocouple junction of 25µ diameter which ended in a sharp tip suitable for AFM. The two wire thermocouples that were fabricated acted as a thermal bridge in the measurements, distorting the real thermal picture of the sample. These thermocouples reflected only the relative thermal character of the samples and did not give an absolute thermal measure of the temperature.

In addition to the above, various attempts have been made to obtain microelectrodes for micro-electrochemical measurements. The most successful of these approaches was by Abruna [B.D. Pendley and H.D. Abruña, Anal. Chem 62, 782-784 (1990)]. However, the technology employed was uncontrolled in the fabrication of these electrochemical probes, and limited the dimensionality of the probes. Furthermore, it did not allow for the interfacing of these electrodes with normal force sensing scanned probe microscopes.

Furthermore, micromagnetic measurements have only been performed with magnetic wires and these are notoriously difficult to fabricate. Finally, field emission tips produced today by a variety of procedures unrelated to the present invention have less than ideal characteristics.

From EP 0 245 660 A2 a scanning thermal profiling apparatus for investigating surface structures is known having a tapered scanning tip which is provided with a surrounding insulation material.

WO 92/21135 A discloses a universal scanning probe with a conical part made of a conducting material and surrounded by a flexible arm. The conical tapered part is connected at its large diameter end to a conducting line such as a metal wire.

### Summary of the Invention

The problem underlying the present invention is solved by an assembly with the features of claim 1 and a method for producing such an assembly according to claim 15.

The present invention provides a new technique for microtemperature measurements with thermocouples that have a submicrometer contact size and a response time of a few microseconds. The technique is also applicable to microchemical measurement and micromagnetic measurements and is capable of being interfaced transparently with a normal force sensing scanned probe microscope. The technology is also extendable into the realm of making unique field emission tips.

The invention develops a new tip for such microelectrochemical and fast microthermocouple measurements, including those connected with the detection of light and light induced heating effects, providing a tip that can be interfaced with atomic force microscopy. In addition, with the appropriate materials, the devices are applicable to micromagnetic measurements. The techniques developed also are applicable to microfield emission devices and yield such devices with improved characteristics.

The device of the invention consists, in one embodiment, of a tapered, nonconductive structure such as a glass or quartz micropipette having a conical tip. A metal wire is sealed within the micropipette and extends to, and is exposed at, the end of the tip. The conical tip is coated with an electrically conductive or semiconductive layer that forms a point thermocouple contact with the metal wire. The outer diameter of the tip is a few nanometers, with the diameter of the wire being 1/2 to 1/3 the outer diameter of the tip.

The tip is fabricated by placing a metal wire within a tube of borosilicate, for example, and the tube is heated and pulled to produce two tapered micropipettes. Thereafter, a thin metal or semiconductor film is evaporated onto the outer surface of the tip, with the rate and time of deposition being controlled to produce the desired thickness.

### Brief Description of Drawings

The foregoing, and additional objects, features and advantages of the invention will be understood by those of skill in the art upon consideration of the following detailed description of preferred embodiments thereof, taken with the accompanying drawings, in which:
Fig. 1 is a diagrammatic cross-sectional view of a curved micropipette fabricated in accordance with the present invention; and
Fig. 2 is an enlarged cross-sectional view of a micropipette tip for use as an extension to a conventional force sensing cantilever.

### Description of the Invention

The invention represents a method and a device for the production of microthermocouples for the measurement of temperature with resolutions that can be as good as submicron with response times that can be as good as microseconds. The fabrication procedures result also in microelectrochemical devices that can have submicron resolution. All of the devices described herein can be effectively integrated into conventional scanned probe microscopes.

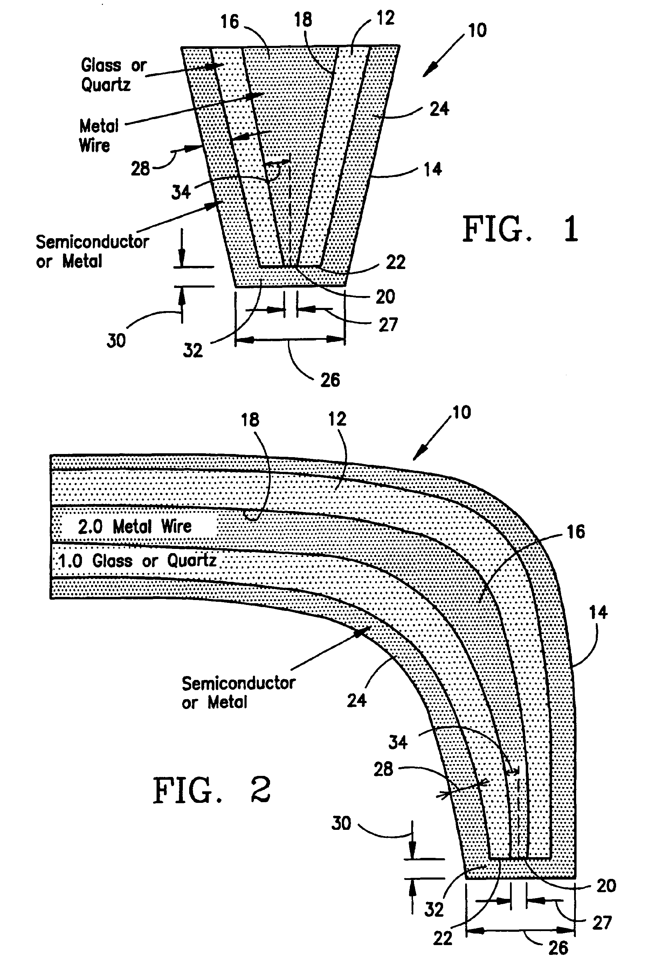

The device of the present invention is a hollow micropipette 10 constructed of glass or quartz or other nonconducting material 12. The micropipette tapers inwardly along its length to form a conical tip 14, Figure 1. The conical nonconductor has sealed in it a metal core, such as a wire 16 that extends through a hollow center 18 of the micropipette, with the terminal end 20 of the wire being coextensive with the terminal end 22 of the conical tip portion 14 of the micropipette 10. The metal wire is electrically conductive and is exposed at the micropipette tip to contact a metal or semiconductor layer 24 which coats the entire tip 14. The layer 24 forms a point thermocouple contact with the exposed end 20 of the metal wire at the tip.

This tip 14 can be a straight structure or it can be part of a bent glass micropipette (see Figure 2), for the addition of normal force sensing. The outer diameter 26 of tip 14 can be as small as a few nanometers at the tip end 22, with the diameter 27 of the wire 16 inside being smaller by approximately 2-3 times.

For temperature measurements, the inner wire and the outer coating are connected to a voltmeter (not shown). For temperature measurements wherein the structure is not distorted by heat transfer through the wire core 16, the outside coating 24 surrounding the pipette 12 should have a thickness 28 of at least an order of magnitude less than the thickness of the coating 30 at the end 32 of the tip 14 when the coating is for metal. When the outer coating is a semiconductor this requirement is not important because of the low thermal conductivity of the semiconductor.

As illustrated in both Fig. 1 and Fig. 2, the wire 16 is generally conical in shape at its end portion, with the diameter tapering inwardly to its smallest size at its terminal end 20. The angle of taper, or the cone angle 34 of the wire near the end of the tip must be at least three times less than the ratio of the thermal conductivity of the medium times the outer diameter 26 of the tip to the thermal conductivity of the inner wire material, 2.0, times the diameter of this wire.

For microelectrode production the coating 32 on the front face of the tip can be eliminated, while for microchemical measurements both this coating 32 and the outer coating 24, can be eliminated. For field emission tips it may be necessary to etch the inner wire 16 either to expose it or to recess it in the glass tip.

For micromagnetic measurements the metal wire 16 has to be composed of a magnetic material while the coating 24 has to be composed of a non-magnetic metal for shielding.

The technique for the production of these microelectrodes, field emission tips and microthermocouples involves placing a metal wire, from 50-100 micrometers in diameter, inside a borosilicate tube with outer and inner diameters equal to 1.2 and 0.3mm, respectively. This tube-wire assembly is placed in a tube pulling device (not shown) which allows the variation of 5 parameters: temperature of heating, the length of the segment heated, delay time between turning the heat on and the beginning of pulling, the velocity of the pull and the strength of the pulling. Such a device can generate the tip shown in Figure 1.

To produce the required structure a pulling operation is performed in the following 2 steps:
First, the two ends of the glass tube and wire assembly are secured in the pulling device and the glass tube is pulled (or stretched) to reduce its diameter. In this first step, the tube is pulled until its inner diameter 18 is equal to the inner wire diameter. At this point the tube is heated for several seconds without further pulling to ensure a firm connection between the glass and the inner metal wire. Thereafter, the pulling is continued slowly, in 4 stages, resulting in the formation of two tapered glass-pipettes that are filled with metal to the end. The shape of the pipette and wire cones and their diameters are determined by the five pulling parameters noted above, with the wire core within the pipette reaching a diameter in the nanometer range.

This first step in the process is sufficient for producing microelectrodes. For field emission tips a second etching step is sometimes necessary in order to either recess or to expose the inner metal wire.

Subsequently, a second thermoelectrode is made as a vacuum-evaporated thin metal or semiconductor film 24. The deposition procedure controls the thickness of the film in various regions. Edge-like coatings with a maximal thickness of the coated layer near the tip can be produced to fulfill the conditions described above. Varying the rate and time of deposition provides coatings with the required thickness and electrical conductance [M. Adamov, B. Perovic, and T. Nenadovic, Thin Solid Films. 24, 89 (1974)] to improve the spatial resolution of the thermocouples.

An alternate method to deposit the inner metal wire is a non-electrochemical method of metallic deposition such as self-assembly of metal colloids on the inside glass or quartz surface 18 of the pipette 12 using technologies that have been described for such depositions on regular glass surfaces [R,G, Freeman et al Science 267, 1629 (1995)]. Similar procedures could be employed to coat the outside of the nonconducting structure and then this could be coupled with known electrochemical deposition techniques to eliminate some of the subsequent deposition steps in producing these structures. In essence this could, in principle, simplify the depositions required for achieving the devices described above.

Finally, to fabricate micromagnetic probes using this procedure, either of the above two techniques for deposition of a metallic wire inside is feasible. Thus, this can be done by the pulling technology or the chemical methods noted above.

All of the above straight structures can be produced with the type of control that permits the resonance frequency of the structure to be controlled to the point of permitting these straight structures to be used for monitoring lateral forces of surfaces. For such measurements with these straight structures, modulations of the conical tip will have to be imposed and the amplitude and the frequency of such modulations will change when the tip approaches the surface.

For force measurements normal to a surface, the region above the sensing tip in the pipette like structure has to be bent. The method of micropipette bending is as follows. The micropipette is placed under a lens of a microscope in such a way that a section of it that is a few tens of micrometers distant from the tip is heated with a heat source such as a carbon dioxide laser also focused through a lens.. As a result of this heating the micropipette begins to soften in the irradiated region and this section of the micropipette eventually bends. The angle of bend can be controlled, and may approach, or even exceed, the 90° bend illustrated in Figure 2. This procedure allows for fine control of the angle of bending and length of the resulting tip.

In distinction from the known wire thermocouples, the proposed construction allows creation of a submicron dimension microelectrode, field emission tip, micromagnetic tip, and a tip with a thermoelectric contact. The spatial resolution that can be achieved can be as small as nanometers. Surface temperatures can be measured using the bent structure shown in Figure 2. Calculations and experiments show that the response time of the thermocouple with a tip diameter 26 of less than 1 micron is about 1 microsecond. The method of fabrication of these microthermocouples, microelectrodes and micromagnetic tips provides a high degree of control of the wire and glass diameter in the conical part of the tip, the cone angle of the conical structure, the resonant frequency of the structure for its application to simultaneous force measurements, etc.

A variety of applications with these devices and this technology is now possible. These include microthermal measurements, for example in microcircuits that are functioning, while simultaneously recording their topography with the force sensing capabilities of the tips. Micromagnetic measurements and combined micromagnetic, thermal and topographic measurements can also be made. New and improved field emission tips for such areas as electron microscope are also provided, as are electrochemical measurements with microelectrodes that have high spatial resolution and the capability of simultaneously monitoring topography with the force sensing capability of the tips.

## Claims

1. An assembly, comprising:
an electrically nonconductive tube (12) having a conical tip portion (14) incorporating an inwardly tapering outer surface; the tube (12) having a terminal end (22); a tapered metal inner core (16) within the tube (12), the core (16) tapering to a diameter in the nanometer range at an end portion thereof, **characterized in that** the core (16) has a terminal end (20) coextensive with the terminal end (22) of the tube (12), that a conductive or semiconductive coating (24) on the outer surface of the tip portion (14) of the tube (12) is provided, and that the cone angle (34) of the inner core (16) near the end of the tip portion (14) is at least three times less than the ratio of the thermal conductivity of the coating (24) times the outer diameter (26) of the tip end to the thermal conductivity of the inner core (16) times the diameter (27) of the inner core (16) at the terminal end (20) thereof.

2. The assembly according to claim 1, **characterized in that** a conductive or semiconductive coating (32) is provided at the end of the tip portion (14).

3. The assembly according to one of the preceding claims, **characterized in that** the coating consists of metal.

4. The assembly according to one of the preceding claims, **characterized in that** the tube (12) is a micropipette.

5. The assembly according to claim 4, **characterized in that** the tube (12) includes a linear portion terminating in the tip portion (14), the tip portion (14) extending from the rest of the micropipette with an angle that can approach ninety degrees, resulting in a tapered structure with a bend leading to the tip portion (14).

6. The assembly according to one of the preceding claims, **characterized in that** the diameter (27) of the metal core (16) is approximately two to three times smaller than the outer diameter (26) of the tip portion (14).

7. The assembly according to one of the claims 2 to 6, **characterized in that** the metal core (16) and said conductive or semiconductive coating (24) are connected to a voltmeter.

8. the assembly according to one of the claims 2 to 5, **characterized in that** said conductive or semiconductive coating (24) surrounding the tube (12) has a thickness (28) of at least an order of magnitude less than the thickness (30) of the coating (32) at the end of the conical tip portion.

9. The assembly according to one of the preceding claims, **characterized in that** the cone angle (34) of the metal core (16) near the end of the tip portion (14) is at least three times less than the ratio of the thermal conductivity of the coating (24) times the outer diameter (26) of the tip portion (14) to the thermal conductivity of the metal core (16) times the diameter (27) of the metal core (16).

10. The assembly according to one of claims 2 to 9, **characterized in that** the metal core (16) is composed of a magnetic material while the coating (24, 32) is composed of a non-magnetic material.

11. The assembly according to one of the preceding claims, **characterized in that** the tube (12) is composed of a silicon insulating material.

12. The assembly according to one of the preceding claims, **characterized in that** the tube (12) and the metal core (16) have resonance frequencies and geometries selected to be used for force sensing.

13. The assembly according to one of the preceding claims, **characterized in that** the assembly is a straight structure, its resonance frequency selected to be used for sensing lateral forces.

14. The assembly according to one of the claims 1 to 12, **characterized in that** the assembly is a bent structure.

15. Method for producing an assembly according to one of the preceding claims, **characterized in that** a metal wire is placed inside a tube (12), the tube-wire assembly is placed in a tube pulling device and secured thereto, the tube (12) is pulled and heated.

16. The method according to claim 15, **characterized in that** the pulling and heating of the tube involves the steps of pulling the tube (12) until its inner diameter (18) is equal to the inner wire diameter, heating the tube for several seconds without further pulling and subsequent pulling.

17. The method according to claim 15 or 16, **characterized in that** the straight assembly is heated in one section to soften the section to obtain a bent structure.

## Patentansprüche

1. Eine Anordnung, aufweisend:
ein elektrisch nicht leitendes Rohr (12) mit einem konischen Spitzenteil (14), eine sich nach innen verjüngende Außenfläche aufweisend; wobei das Rohr (12) ein Stirnende (22) besitzt; einen sich verjüngenden Innenkern (16) aus Metall innerhalb des Rohrs (12), wobei der Kern (16) sich an einem Endteil bis auf einen Durchmesser im Nanometerbereich verjüngt, **dadurch gekennzeichnet, dass** der Kern (16) ein Stirnende (20) besitzt, das dieselbe Ausdehnung wie das Stirnende (22) des Rohrs (12) hat, dass eine leitende oder halbleitende Beschichtung (24) auf der Außenfläche des Spitzenteils (14) des Rohrs (12) bereitgestellt wird und dass der Konuswinkel (34) des Innenkerns (16) nahe dem Ende des Spitzenteils (14) mindestens dreimal kleiner ist als das Verhältnis der Wärmeleitfähigkeit der Beschichtung (24), multipliziert mit dem Außendurchmesser (26) des Spitzenendes, zur Wärmeleitfähigkeit des Innenkerns (16), multipliziert mit dem Durchmesser (27) des Innenkerns (16) am Stirnende (20) davon.

2. Anordnung gemäß Anspruch 1, **dadurch gekennzeichnet, dass** eine leitende oder halbleitende Beschichtung (32) am Ende des Spitzenteils (14) bereitgestellt wird.

3. Anordnung gemäß einem der vorangegangenen Ansprüche, **dadurch gekennzeichnet, dass** die Beschichtung aus Metall besteht.

4. Anordnung gemäß einem der vorangegangenen Ansprüche, **dadurch gekennzeichnet, dass** das Rohr (12) eine Mikropipette ist.

5. Anordnung gemäß Anspruch 4, **dadurch gekennzeichnet, dass** das Rohr (12) einen linearen Teil besitzt, der im Spitzenteil (14) endet, wobei der Spitzenteil (14) sich vom Rest der Mikropipette in einem Winkel erstreckt, der nahezu neunzig Grad erreichen kann, woraus sich eine sich verjüngende Struktur ergibt, bei der eine Biegung zum Spitzenteil (14) führt.

6. Anordnung gemäß einem der vorangegangenen Ansprüche, **dadurch gekennzeichnet, dass** der Durchmesser (27) des Metallkerns (16) annähernd zwei- bis dreimal kleiner als der Außendurchmesser (26) des Spitzenteils (14) ist.

7. Anordnung gemäß einem der Ansprüche 2 bis 6, **dadurch gekennzeichnet, dass** der Metallkern (16) und die leitende oder halbleitende Beschichtung (24) an ein Voltmeter angeschlossen sind.

8. Anordnung gemäß einem der Ansprüche 2 bis 5, **dadurch gekennzeichnet, dass** die leitende oder halbleitende Beschichtung (24), die das Rohr (12) umgibt, eine Dicke (28) von mindestens einer Größenordnung kleiner als die Dicke (30) der Beschichtung (32) am Ende des konischen Spitzenteils hat.

9. Anordnung gemäß einem der vorangegangenen Ansprüche, **dadurch gekennzeichnet, dass** der Konuswinkel (34) des Metallkerns (16) nahe dem Ende des Spitzenteils (14) mindestens dreimal kleiner ist als das Verhältnis der Wärmeleitfähigkeit der Beschichtung (24), multipliziert mit dem Außendurchmesser (26) des Spitzenteils (14), zur Wärmeleitfähigkeit des Metallkerns (16), multipliziert mit dem Durchmesser (27) des Metallkerns (16).

10. Anordnung gemäß einem der Ansprüche 2 bis 9, **dadurch gekennzeichnet, dass** der Metallkern (16) aus einem magnetischen Material besteht, während die Beschichtung (24, 32) sich aus einem nicht magnetischen Material zusammensetzt.

11. Anordnung gemäß einem der vorangegangenen Ansprüche, **dadurch gekennzeichnet, dass** das Rohr (12) aus einem isolierenden Material auf Siliziumbasis besteht.

12. Anordnung gemäß einem der vorangegangenen Ansprüche, **dadurch gekennzeichnet, dass** das Rohr (12) und der Metallkern (16) für den Einsatz bei der Krafterfassung ausgewählte Resonanzfrequenzen und Geometrien besitzen.

13. Anordnung gemäß einem der vorangegangenen Ansprüche, **dadurch gekennzeichnet, dass** die Anordnung eine gerade Struktur ist, deren Resonanzfrequenz für den Einsatz beim Erfassen seitlicher Kräfte ausgewählt ist.

14. Anordnung gemäß einem der Ansprüche 1 bis 12, **dadurch gekennzeichnet, dass** die Anordnung eine gebogene Struktur ist.

15. Verfahren zum Herstellen einer Anordnung gemäß einem der vorangegangenen Ansprüche, **dadurch gekennzeichnet, dass** ein Metalldraht in ein Rohr (12) eingelegt wird, die Rohr-Draht-Anordnung in eine Rohrziehvorrichtung eingelegt und an ihr befestigt wird und das Rohr (12) gezogen und erwärmt wird.

16. Verfahren gemäß Anspruch 15, **dadurch gekennzeichnet, dass** das Ziehen und Erwärmen des Rohrs die Schritte des Ziehens des Rohrs (12) solange, bis sein Innendurchmesser (18) gleich dem inneren Drahtdurchmesser ist, des Erwärmens des Rohrs für mehrere Sekunden ohne weiteres Ziehen, und des anschließenden Ziehens aufweist.

17. Verfahren gemäß Anspruch 15 oder 16, **dadurch gekennzeichnet, dass** die gerade Anordnung in einem Abschnitt erwärmt wird, um den Abschnitt zu erweichen mit dem Ziel, eine gebogene Struktur zu erhalten.

## Revendications

1. Ensemble comprenant :
un tube électriquement non conducteur (12) ayant une partie de pointe conique (14 comprenant une surface externe progressivement rétrécie vers l'intérieur ; le tube (12) ayant une extrémité terminale (22) ; un noyau interne en métal progressivement rétréci (16) à l'intérieur du tube (12), le noyau (16) se rétrécissant progressivement jusqu'à un diamètre de l'ordre du nanomètre au niveau de sa partie d'extrémité, **caractérisé en ce que** le noyau (16) a une extrémité terminale (20) coextensive avec l'extrémité terminale (22) du tube (12) de sorte qu'un revêtement conducteur ou semi-conducteur (24) est prévu sur la surface externe de la partie de pointe (14) du tube (12), et de sorte que l'angle de conicité (34) du noyau interne (16) à proximité de l'extrémité de la partie de pointe (14) est au moins trois fois inférieur au rapport de la conductivité thermique du revêtement (24) multipliée par le diamètre externe (26) de l'extrémité de pointe sur la conductivité thermique du noyau interne (16) multipliée par le diamètre (27) du noyau interne (16) au niveau de son extrémité terminale (20).

2. Ensemble selon la revendication 1, **caractérisé en ce qu'**un revêtement conducteur ou semi-conducteur (32) est prévu au niveau de l'extrémité de la partie de pointe (14).

3. Ensemble selon l'une quelconque des revendications précédentes, **caractérisé en ce que** le revêtement se compose de métal.

4. Ensemble selon l'une quelconque des revendications précédentes, **caractérisé en ce que** le tube (12) est une micropipette.

5. Ensemble selon la revendication 4, **caractérisé en ce que** le tube (12) comprend une partie linéaire se terminant par la partie de pointe (14), la partie de pointe (14) s'étendant à partir du reste de la micropipette avec un angle qui peut approcher les quatre-vingt dix degrés, se traduisant par une structure progressivement rétrécie avec une courbure menant jusqu'à la partie de pointe (14).

6. Ensemble selon l'une quelconque des revendications précédentes, **caractérisé en ce que** le diamètre (27) du noyau métallique (16) est approximativement deux à trois fois plus petit que le diamètre externe (26) de la partie de pointe (14).

7. Ensemble selon l'une quelconque des revendications 2 à 6, **caractérisé en ce que** le noyau métallique (16) et ledit revêtement conducteur ou semi-conducteur (24) sont raccordés à un voltmètre.

8. Ensemble selon l'une quelconque des revendications 2 à 5, **caractérisé en ce que** ledit revêtement conducteur ou semi-conducteur (24) entourant le tube (12) a une épaisseur (28) au moins d'un ordre de grandeur inférieur à l'épaisseur (30) du revêtement (32) à l'extrémité de la partie de pointe conique.

9. Ensemble selon l'une quelconque des revendications précédentes, **caractérisé en ce que** l'angle de conicité (34) du noyau métallique (16) à proximité de l'extrémité de la partie de pointe (14) est au moins trois fois inférieur au rapport de la conductivité thermique du revêtement (24) multipliée par le diamètre externe (26) de la partie de pointe (14) sur la conductivité thermique du noyau métallique (16) multipliée par le diamètre (27) du noyau métallique (16).

10. Ensemble selon l'une quelconque des revendications 2 à 9, **caractérisé en ce que** le noyau métallique (16) est composé d'un matériau magnétique alors que le revêtement (24, 32) est composé d'un matériau non magnétique.

11. Ensemble selon l'une quelconque des revendications précédentes, **caractérisé en ce que** le tube (12) est composé d'un matériau isolant en silicium.

12. Ensemble selon l'une quelconque des revendications précédentes, **caractérisé en ce que** le tube (12) et le noyau métallique (16) ont des fréquences de résonance et des géométries choisies pour être utilisées pour détecter une force.

13. Ensemble selon l'une quelconque des revendications précédentes, **caractérisé en ce que** l'ensemble est une structure droite, sa fréquence de résonance est sélectionnée pour être utilisée afin de détecter des forces latérales.

14. Ensemble selon l'une quelconque des revendications 1 à 12, **caractérisé en ce que** l'ensemble est une structure courbée.

15. Procédé pour produire un ensemble selon l'une quelconque des revendications précédentes, **caractérisé en ce qu'**un fil métallique est placé à l'intérieur d'un tube (12), l'ensemble tube - fil est placé dans un dispositif de traction de tube et fixé à celui-ci, le tube (12) est tiré et chauffé.

16. Procédé selon la revendication 15, **caractérisé en ce que** la traction et le chauffage du tube impliquent les étapes consistant à tirer le tube (12) jusqu'à ce que son diamètre interne (18) soit égal au diamètre de fil interne, chauffer le tube pendant plusieurs secondes sans autres tractions ni traction successive.

17. Procédé selon la revendication 15 ou 16, **caractérisé en ce que** l'ensemble droit est chauffé dans une section afin de ramollir la section pour obtenir une structure courbée.
